Europäisches Patentamt

(19) European Patent Office

Office européen des brevets

(11) Publication number: **0 060 131**
A2

(12) # EUROPEAN PATENT APPLICATION

(21) Application number: **82301183.8**

(22) Date of filing: **08.03.82**

(51) Int. Cl.³: **B 29 D 23/04**
**B 29 D 9/00**

(30) Priority: **09.03.81 GB 8107331**

(43) Date of publication of application:
**15.09.82 Bulletin 82/37**

(84) Designated Contracting States:
**BE CH DE FR GB IT LI NL SE**

(71) Applicant: **Exxon Research and Engineering Company**
**P.O.Box 390 180 Park Avenue**
**Florham Park New Jersey 07932(US)**

(72) Inventor: **Stella, Giandomenico**
**Avenue Herbert Hoover 7**
**B-1040 Brussels(BE)**

(74) Representative: **Dew, Melvyn John et al,**
**Esso Chemical Ltd. Esso Chemical Research Centre P.O.**
**Box 1**
**Abingdon Oxfordshire, OX13 6BB(GB)**

(54) **Process for producing pipes.**

(57) Pipes formed from peroxide crosslinked olefin polymers, especially copolymers and blends, are produced by coating an outer layer onto the pipe to protect it from air during crosslinking in hot air. The outer layer contains substantially no peroxide and may be foamable during the crosslinking process to give insulating pipes for use in central heating systems.

EP 0 060 131 A2

## PROCESS FOR PRODUCING PIPES

This invention relates to a process for producing pipes of crosslinked olefin polymer and is particularly but not exclusively concerned with the production by extrusion of pipes formed out of olefin homo polymers, copolymers and blends crosslinked by peroxide, especially such pipes or tubing that may be used for central heating systems or for drinkable water.

It has been proposed to use rubber pipes for central heating systems but the rubbers used hitherto have allowed air to permeate through, leading to an air/hot water mixture which tends to corrode and rust metal radiators. Rubber pipes have also not been useful for conveying drinking water since they tend to impart an odour and a taste to the water. It is believed that this has generally been due to the presence of di-unsaturated termonomers such as ethylidene norbornene in the rubber.

It has now been found that olefin polymers and copolymers, especially certain copolymers of ethylene and propylene, are particularly suitable for the production of pipes for both central heating and for drinking water. In addition they can be blended with halobutyl rubber for high impermeability and can be compounded to give pipework materials which do not impart odour or taste to drinking water. In order to achieve the necessary rigidity and pressure resistance such olefin polymers and copolymers are ideally vulcanised or crosslinked subsequent to formation into pipes, e.g. by extrusion.

All olefin polymers and ethylene propylene copolymers which do not contain any polyunsaturated termonomer are crosslinked by peroxides and those containing polyunsaturated termonomers may be crosslinked by peroxides. In conventional continuous pipe making and extrusion processes, crosslinking is usually by post extrusion heating, which is generally effected in a hot air oven, possibly after heating in a microwave heating unit. This is, however, unsuitable for the vulcanisation of olefin polymer pipes containing peroxides, since the oxygen in the hot air oven reacts with the free radical sites formed in the polymer so inhibiting vulcanisation and resulting in a sticky surface. Other vulcanisation techniques are possible but are undesirably expensive.

According to the present invention there is provided a process for producing a pipe of crosslinked olefin polymer by forming a peroxide-containing uncrosslinked olefin polymer into a pipe and heating the same in air to a temperature which activates the peroxide and generates crosslinking, characterised in that prior to crosslinking the external surface of the pipe is coated with a protective layer which contains substantially no peroxide and which serves to prevent contact between the hot air and the peroxide-containing olefin polymer during crosslinking.

The olefin polymer may be a homopolymer of ethylene, such as high density polyethylene or low density polyethylene, optionally chlorinated. Ethylene propylene copolymers or terpolymers which also contain a polyunsaturate such as norbornene or blends of any of the above materials may also be used. Preferably, however, in order to achieve the desired rigidity, a copolymer having a relatively high ethylene content is used to form the pipe. It is particularly prefered that the copolymer contains from 50 to 85 wt % ethylene, for example, 70% to 80 wt % ethylene, with the substantial balance being propylene. The pipe may conveniently be produced by extrusion of a formulation of the olefin polymer containing the peroxide and other conventional additives such as fillers, pigments, stabilisers and the like.

The outer protective layer may be applied to the surface of the pipe by any suitable technique. Preferably it is applied by coextrusion onto the extruding pipe from a concentric die.

The choice of material for the protective layer depends upon the use to which the pipe is to be put. For example, the layer may be of an olefin copolymer rubber containing a diolefinic termonomer for vulcanisation in air due to the presence of sulphur and the well known accelerators. An ethylene propylene 5 ethylidene norbornene terpolymer is particularly useful in this regard. As with the olefin polymer formulation from which the pipe itself is produced the protective layer composition may also contain other conventional additives such as fillers, pigments, extenders, plasticisers, stabilisers and the like, but it contains no or substantially no peroxide. When the pipe is to be used in central heating systems, it is preferred that the protective layer be a foamable polymeric composition which foams under the conditions used for crosslinking of the olefin polymer, so producing a vulcanised pipe coated with a foamed insulating layer. Thus, in this preferred embodiment the layer composition should contain a heat activated blowing agent which liberates gas to foam the composition at the temperatures to which the coated pipe is subjected for activation of the peroxide crosslinking agent. The choice of the blowing agent will therefore depend upon the conditions used for crosslinking. Preferably a nitrogen-liberating blowing agent such as azodicarbonamide is used. Flame resistance may be imparted to the foam by compounding with a suitable additive such as aluminium hydrates, chlorinated plasticisers and chlorinated polyethylene.

The olefin polymer may be blended with other rubbers to impart desired properties to the pipe. For example, halobutyl rubber may be included further to enhance the air impermeability. When high impermeability is needed the formulation may contain, for example, as much as 86 wt % halobutyl rubber which may be chlorobutyl, bromobutyl or a blend of the two.

The conditions to be used in the production of the pipes depend upon the exact nature of the polymer formulations. For example, in a particularly preferred process the olefin polymer is a copolymer containing from 70 to 80 wt % ethylene and includes an aliphatic peroxide as crosslinking additive, and the coating is a foamable ethylene copolymer rubber containing a nitrogen liberating heat activated blowing agent such as azodicarbonamide. In this specific case and in general the tube is preferably extruded at from 100 to 120°C and the foamable layer is coextruded from a concentric die onto the outer surface of the tube at about the same temperature. The extruded tube may then pass either via a microwave heating duct or directly into a hot air tunnel generally heated to a temperature in the range 230 to 270°C preferably around 250°C. It has been found that in this way the ethylene propylene copolymer pipe may be vulcanised without the adverse effects of the air and the foam expands to give an insulated pipe suitable for use in domestic central heating systems.

When the pipes are to be used for carrying drinking water it is not necessary that the protective air impermeable layer be foamable. In this instance it is preferred that the layer be solid at the temperatures used for crosslinking the olefin polymer pipe. It is also preferred but not essential that the layer be applied by coextrusion of an outer polymer layer.

Similar production conditions may be used as with the production of foam coated pipe. However, it is especially preferred to make the pipe from ethylene propylene copolymer since this permits drinking water to be transported through the pipe without imparting either odour or taste.

CLAIMS

1.  A process for producing a pipe of crosslinked olefin polymer by forming a peroxide-containing uncrosslinked olefin polymer into a pipe and heating the same in air to a temperature which activates the peroxide and generates crosslinking, characterised in that prior to crosslinking the external surface of the pipe is coated with a protective layer which contains substantially no peroxide and which serves to prevent contact between the hot air and the peroxide-containing olefin polymer during crosslinking.

2.  A process according to claim 1 characterised in that the pipe is formed by extrusion and the protective layer is applied by co-extrusion from a concentric die.

3.  A process according to claim 2 characterised in that extrusion is carried out at a temperature of from 100 to 120°C.

4.  A process according to any one of the preceding claims characterised in that crosslinking is performed at a temperature of from 230 to 270°C.

5.  A process according to any one of the preceding claims characterised in that the protective layer comprises an olefin copolymer rubber containing a diolefin termonomer, which layer is vulcanised under the conditions adopted for crosslinking the peroxide-containing olefin polymer.

6.  A process as claimed in claim 5 characterised in that the protective layer comprises an ethylene propylene 5-ethylidene norbornene terpolymer.

7.  A process as claimed in any one of the preceding claims characterised in that the protective layer is foamable at the temperature used to activate the peroxide and crosslink the olefin polymer.

8.  A process as claimed in any one of the preceding claims characterised in that the olefin polymer is a copolymer of ethylene and propylene containing from 50 to 85 wt % ethylene.

9.  A process as claimed in any one of the preceding claims characterised in that the olefin polymer used to form the pipe is blended with a halobutyl rubber.